# EUROPEAN PATENT APPLICATION

(11) **EP 4 559 983 A1**
(43) Date of publication of application: **28.05.2025**
(21) Application number: 24215103.3
(22) Date of filing: 25.11.2024
(51) Int. Cl.: C09D 11/54, C09D 11/38, C09D 11/102, C09D 11/40, C09D 11/328, D06P 5/30

(54) **INKJET TREATMENT INK, INKJET RECORDING METHOD, AND INKJET RECORDING SYSTEM**

(30) Priority: 27.11.2023 JP 2023199687
(71) Applicant: KONICA MINOLTA, INC., Tokyo 100-7015 (JP)
(72) Inventor: KUROGI, Yusuke, Tokyo, 100-7015 (JP)
(74) Representative: MFG Patentanwälte Meyer-Wildhagen Meggle-Freund Gerhard PartG mbB

(57) **Abstract**

Provided is a water-based inkjet treatment ink for use in combination with a recording ink containing a reactive dye, the inkjet treatment ink containing an alkaline agent and a moisturizer. The alkaline agent is a potassium salt. The solid content concentration of the inkjet processing ink is 20% by mass or more. The water content is 55% by mass or more.

## Description

### BACKGROUND OF THE INVENTION

### TECHNICAL FIELD

The present invention relates to an inkjet treatment ink, an inkjet recording method, and an inkjet recording system. More particularly, the present invention relates to an inkjet treatment ink and the like in which dyeability or color developability in a recorded matter and ejection property from an inkjet head are compatible.

### DESCRIPTION OF RELATED ART

In inkjet recording, pretreatment and posttreatment are performed for the purposes of preventing a recording ink landed on a recording medium from bleeding and improving the fixing property. As one of the treatments, a method of applying a treatment liquid to a recording medium before landing of the recording ink is known.

As a method of applying the treatment liquid in the related art, in addition to an inkjet method, a method of impregnating a recording medium with the treatment liquid is exemplified. In the method of impregnating a recording medium, the treatment liquid is uniformly applied to the whole of the recording medium. On the other hand, in the inkjet method, only a required amount of the treatment liquid can be applied to a required area. As a result, in the inkjet method, the amount of the treatment liquid to be applied to the recording medium can be reduced, and the amount of the residual solvent on the recording medium can be reduced.

However, when the application amount of the treatment liquid per unit area is reduced, the application amount of the solid content component contained in the treatment liquid also decreases, as compared with the method of impregnating the recording medium using the inkjet method from the viewpoint of reducing the residual solvent. Therefore, it is preferable that the treatment liquid used in the inkjet method has a higher solid content concentration than the treatment liquid for impregnation.

International Publication No. 2004/085739 discloses a technology for a pretreatment liquid to be supplied to a recording medium by an inkjet method, the pretreatment liquid containing solvents, sizing agents, moisturizer, surfactants, alkaline agents, and distilled water. It was found that since the pretreatment liquid had a high solid content concentration, the solid content was not completely dissolved and was likely to precipitate.

Patent Publication No. 2011-084689 discloses a technology relating to a textile printing ink set composed of a functional ink containing a hydrotropic agent and a recording ink containing a water-soluble polymer. The ink set has a high content of the organic solvent and requires a certain amount of time for drying to remove the solvent. Therefore, as a further improvement, a method of increasing the content of water which is easily removed by drying has been examined. However, it has been found that when the content of water in the treatment liquid is increased, the solid content is easily dissolved and easily removed by drying, but the viscosity of the treatment liquid is decreased, and ejection failure easily occurs.

### SUMMARY OF THE INVENTION

The present invention has been made in consideration of the above-described problems and situations, and its problem to be solved is to provide an inkjet treatment ink, an inkjet recording method, and an inkjet recording system which satisfy both the dyeability or color developability in a recorded matter and the ejection property from an inkjet head.

In order to solve the above-described problem, the present inventors have investigated the causes of the above-described problems and the like, and as a result, they have found that in a water-based inkjet treatment ink to be used in combination with a recording ink containing a reactive dye, by containing a potassium salt and a moisturizer and setting the solid content concentration and the water content within specific ranges, both the dyeability or color developability in a recorded matter and the ejection property from an inkjet head can be achieved, which has led to the present invention.

That is, the above-described problem according to the present invention is solved by the following means.

According to an aspect of the present invention, provided is a water-based inkjet treatment ink for use in combination with a recording ink containing a reactive dye, the inkjet treatment ink containing an alkaline agent and a moisturizer,
wherein the alkaline agent is a potassium salt,
the solid content concentration of the inkjet processing ink is 20% by mass or more, and
the water content is 55% by mass or more.

According to another aspect of the present invention, provided is an inkjet recording method using an inkjet treatment ink,
wherein the inkjet treatment ink is the water-based inkjet treatment ink described above, and
the inkjet treatment ink and the recording ink are applied to a fabric from each inkjet head, respectively.

According to another aspect of the present invention, provided is an inkjet recording system using an inkjet treatment ink,
wherein the inkjet treatment ink is the water-based inkjet treatment ink described above, and
the inkjet recording system comprises: a first applying part for applying the recording ink to a fabric; and a second applying part for applying the inkjet treatment ink to the fabric.

The above-described means of the present invention can provide an inkjet treatment ink, an inkjet recording method, and an inkjet recording system which satisfy both the dyeability or color developability in a recorded matter and the ejection property from an inkjet head.

The realization mechanism or action mechanism of the effect of the present invention is not clear, but it is inferred as follows. Hereinafter, the "inkjet treatment ink" is also simply referred to as "treatment ink".

The treatment ink of the present invention contains an alkaline agent and a moisturizer, and the solid content concentration including them is 20% by mass or more. The treatment ink can promote fixing of a reactive dye in the steam treatment after ink application and improve the dyeability or color developability of the recorded matter by containing a moisturizer at a sufficient concentration. The treatment ink can promote fixing of the reactive dye and improve the dyeability or color developability of the recorded matter by containing an alkaline agent at a sufficient concentration.

The treatment ink of the present invention has a water content of 55% by mass or more. By making the water content relatively large, the metal salt as the alkaline agent is easily dissolved. Furthermore, by making the water content relatively large, it is possible to make it easier to remove the solvent by drying and to improve the dyeability or color developability of the recorded matter.

The treatment ink of the present invention contains a potassium salt as an alkaline agent. The potassium salt has relatively high solubility among metal salts used as the alkaline agent, and is difficult to precipitate. Therefore, it is considered that the solubility of the treatment ink can be improved and the ejection property from an inkjet head can be improved.

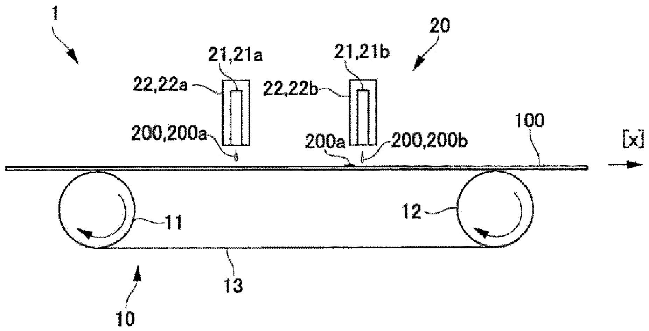

### BRIEF DESCRIPTION OF THE DRAWING(S)

The advantages and features provided by one or more embodiments of the invention will become more fully understood from the detailed description given hereinafter and the appended drawing(s) which are given by way of illustration only, and thus are not intended as a definition of the limits of the present invention, and wherein:
Figure is a schematic configuration diagram illustrating an example of an inkjet recording apparatus used in the inkjet recording method of the present invention.

### DETAILED DESCRIPTION

The inkjet treatment ink of the present invention is an aqueous inkjet treatment ink used in combination with a recording ink containing a reactive dye, the inkjet treatment ink containing an alkaline agent and a moisturizer, the alkaline agent being a potassium salt, the inkjet treatment ink having a solid content concentration of 20% by mass or more and a water content of 55% by mass or more.

This feature is a technical feature common to or corresponding to the following embodiments.

In an embodiment of the present invention, the alkaline agent is preferably potassium carbonate or potassium hydrogen carbonate, from the viewpoint of achieving both the dyeability or color developability in a recorded matter and the ejection property from an inkjet head.

In an embodiment of the present invention, the moisturizer is preferably urea or 2-imidazolidinone, from the viewpoint of the dyeability or color developability in the recorded matter.

In an embodiment of the present invention, it is preferable to contain a water-soluble polymer, from the viewpoint of the ejection property from an inkjet head. In particular, the water-soluble polymer is preferably polyethylene glycol.

In an embodiment of the present invention, the viscosity of the inkjet treatment ink at 25 °C is preferably 3.5 mPa·s or more, from the viewpoint of ejection property from an inkjet head.

In an embodiment of the present invention, from the viewpoint of solubility, the solubility of the potassium salt in water at 25 °C is preferably 30 g/100 mL or more.

In an embodiment of the present invention, the content of the potassium salt is preferably in a range of 3 to 10% by mass relative to the total mass of the inkjet treatment ink from the viewpoint of the dyeability or color developability in the recorded matter.

In an embodiment of the present invention, from the viewpoint of dyeability or color developability in the recorded matter, the content of the moisturizer is preferably in a range of 10 to 30% by mass relative to the total mass of the inkjet treatment ink.

The inkjet recording method of the present invention is an inkjet recording method using an inkjet treatment ink, wherein the inkjet treatment ink and the recording ink are applied to a fabric from inkjet heads, respectively.

As an embodiment of the present invention, from the viewpoint of exhibiting the effect of the present invention, it is preferable that the inkjet treatment ink and the recording ink are applied to a fabric to which an alkaline agent and a moisturizer are not applied.

As an embodiment of the present invention, it is preferable that the inkjet treatment ink and the recording ink are applied in any order, and the amount of the inkjet treatment ink applied to the fabric is set to 30 g/m² or less, from the viewpoint of being able to suppress bleeding at the time of landing.

The inkjet recording system of the present invention is an inkjet recording system using an inkjet treatment ink, the inkjet recording system including: a first applying part that applies the recording ink to a fabric; and a second applying part that applies the inkjet treatment ink to the fabric.

Hereinafter, the present invention, constituent elements thereof, and forms and aspects for carrying out the present invention will be described in detail. In the present description, when two figures are used to indicate a range of value before and after "to", these figures are included in the range as a lower limit value and an upper limit value.

### 1. Summary of Inkjet Treatment Ink

The inkjet treatment ink of the present invention is an aqueous inkjet treatment ink used in combination with a recording ink containing a reactive dye, the inkjet treatment ink containing an alkaline agent and a moisturizer, the alkaline agent being a potassium salt, the inkjet treatment ink having a solid content concentration of 20% by mass or more and a water content of 55% by mass or more.

When the treatment ink of the present invention is used in combination with a recording ink, bleeding of the recording ink can be prevented and the fixing property of the recording ink can be improved. The treatment ink of the present invention may be a pretreatment ink or a posttreatment ink. The pretreatment ink is landed on the recording medium to perform treatment before the recording ink is landed. The posttreatment ink is landed on the recording medium to perform treatment after the recording ink is landed.

In the present invention, the pretreatment or the posttreatment is preferably performed by a "wet-on-wet method". The "wet-on-wet method" refers to the merging (mixing) of the treatment ink and the recording ink together in a liquid state.

In the present invention, the term "dyeing" means fixing (dyeing) a coloring matter to a fabric using a color material (dye). The term "dyeability" refers to the ability to express the fixing (dyeing) of a coloring matter, or the extent or degree thereof. The term "coloring" refers to developing a desired color in a fabric using a color material (dye). The term "color developability" refers to the ability to develop a desired color or the extent or degree of color development relative to a desired color.

By using the inkjet treatment ink of the present invention, the coloring matter contained in the recording ink can be more fixed to the recording medium, and the dyeability can be improved. In addition, it is considered that by using the inkjet treatment ink of the present invention, a color closer to a desired color can be developed on a fabric, that is, the color developability is improved.

### 2. Configuration of Inkjet Treatment Ink

The treatment ink of the present invention contains an alkaline agent, a moisturizer, and water. If necessary, a water-soluble polymer, a surfactant, a preservative, an organic solvent, and the like may be contained. Hereinafter, description will be given in order. Note that in the present invention, the "solid content concentration" refers to the proportion of the solid content relative to the total mass of the treatment ink. For example, among the above-described components, the alkaline agent, the moisturizer, the water-soluble polymer, and the like correspond to the solid content component.

The ink according to the present invention preferably does not contain a reduction inhibitor (sodium m-nitrobenzenesulfonate). This prevents the precipitation of the reduction inhibitor having low solubility, which reduces the ejection property of the treatment ink from an inkjet head.

### (1) Alkaline agent

The treatment ink of the present invention contains an alkaline agent, which promotes fixing of the reactive dye contained in the recording ink to the recording medium, thereby improving the dyeability or the color developability.

In the present invention, the alkaline agent is a potassium salt. The potassium salt has relatively high solubility among metal salts used as the alkaline agent, and is difficult to precipitate. Therefore, sufficient ejection property from the inkjet head can be ensured.

Examples of the potassium salt include potassium carbonate, potassium hydrogen carbonate, potassium dihydrogen phosphate, dipotassium hydrogen phosphate, and tripotassium phosphate. From the viewpoint of dyeability or color developability, the potassium salt is preferably potassium carbonate or potassium hydrogen carbonate.

From the viewpoint of solubility and ejection property, the solubility of the potassium salt in water at 25 °C is preferably 30 g/100 mL or more. Examples of the potassium salt having a solubility of 30 g/100 mL or more include potassium carbonate, potassium hydrogen carbonate, dipotassium hydrogen phosphate, tripotassium phosphate and the like.

The content of the alkaline agent is preferably in a range of 3 to 10% by mass and more preferably in a range of 4 to 8% by mass relative to the total mass of the treatment ink. When the content is within the above range, sufficient ejection property from an inkjet head can be ensured while sufficient dyeability or color developability can be ensured.

### (2) Moisturizer

In the present invention, the term "moisturizer" refers to a compound that has the function of promoting the fixing of the reactive dye to a recording medium by following the vapor and the steam in the coloring process by steam treatment after ink application.

The treatment ink of the present invention contains a moisturizer, which promotes fixing of the reactive dye to a recording medium, thereby improving the dyeability or the color developability. Note that "after ink application" refers to the state after the recording ink and the treatment ink are applied to the recording medium.

Examples of the moisturizer include urea and 2-imidazolidinone (ethylene urea). Among these, the moisturizer is preferably 2-imidazolidinone. 2-Imidazolidinone is unlikely to be hydrolyzed in an alkaline treatment ink and has excellent long-term storage stability.

The content of the moisturizer is preferably in the range of 10 to 30% by mass and more preferably in the range of 15 to 25% by mass relative to the total mass of the treatment ink. When the content is within the above range, sufficient ejection property from an inkjet head can be ensured while sufficient dyeability or color developability can be ensured.

### (3) Water-soluble Polymer

In the present invention, the term "water-soluble" of the "water-soluble polymer" refers that the amount of a target substance dissolved in 100 parts by mass of water at 25 °C is 5 parts by mass or more. Since the polymer is water-soluble, it can be used for a water-based treatment ink.

The water-soluble polymer is classified into a low-viscosity water-soluble polymer and a high-viscosity water-soluble polymer. In the present invention, the "low-viscosity water-soluble polymer" has a viscosity of 4 mPa·s or less in a 1% by mass aqueous solution at 25 °C. The "high-viscosity water-soluble polymer" has a viscosity of greater than 4 mPa·s in a 1% by mass aqueous solution at 25 °C. Note that the high-viscosity water-soluble polymer is also called a "sizing agent".

### (3.1) Low-viscosity Water-soluble Polymer

The treatment ink of the present invention contains the low-viscosity water-soluble polymer, which allows the viscosity to be adjusted and ensures sufficient ejection property from an inkjet head.

Examples of the low-viscosity water-soluble polymer include polyvinylpyrrolidone; polyethylene glycol; ethylene oxide-propylene oxide copolymer; polyethylene oxide adducts of glycerin; polypropylene adducts of glycerin; polyethylene oxide adducts of diglycerin and polypropylene adducts of diglycerin.

The content of the low-viscosity water-soluble polymer is preferably in the range of 0 to 10% by mass and more preferably in the range of 2 to 8% by mass relative to the total mass of the treatment ink.

### (3.2) High-viscosity Water-soluble Polymer (Sizing agent)

The treatment ink of the present invention contains the high-viscosity water-soluble polymer, which prevents the reactive dye from diffusing on a recording medium to cause bleeding at the time of landing of the recording ink on the recording medium or at the time of steam treatment after ink application.

Examples of the high-viscosity water-soluble polymer include sodium alginate, carboxymethyl cellulose, and starch.

The content of the high-viscosity water-soluble polymer is preferably in the range of 0 to 5% by mass and more preferably in the range of 0 to 3% by mass relative to the total mass of the treatment ink.

### (4) Surfactant

As the surfactant, any of cationic, anionic, amphoteric, and nonionic surfactants can be used.

Examples of the cationic surfactant include aliphatic amine salts, aliphatic quaternary ammonium salts, benzalkonium salts, benzethonium chloride, pyridinium salts, imidazolinium salts, and the like.

Examples of the anionic surfactant include fatty acid soaps, N-acyl-N-methylglycine salts, N-acyl-N-methyl-β-alanine salts, N-acyl glutamates, alkyl ether carboxylates, acylated peptides, alkyl sulfonates, alkylbenzene sulfonates, alkylnaphthalene sulfonates, dialkyl sulfosuccinate salts, alkyl sulfoacetates, α-olefin sulfonates, N-acylmethyltaurine, sulfated oils, higher alcohol sulfate salts, secondary higher alcohol sulfate ester salts, alkyl ether sulfates, secondary higher alcohol ethoxy sulfates, polyoxyethylene alkylphenyl ether sulfates, monoglysulfates, fatty acid alkylolamide sulfate ester salts, alkyl ether phosphate ester salts, alkyl phosphate ester salts and the like.

Examples of the amphoteric surfactant include a carboxybetaine type, a sulfobetaine type, an aminocarboxylic acid salt, and imidazolinium betaine.

Examples of the nonionic surfactant include polyoxyethylene alkyl ether, polyoxyethylene secondary alcohol ether, polyoxyethylene alkylphenyl ether, polyoxyethylene sterol ether, polyoxyethylene lanolin derivative, polyoxyethylene polyoxypropylene alkyl ether, polyoxyethylene glycerin fatty acid ester, polyoxyethylene castor oil, hydrogenated castor oil, polyoxyethylene sorbitan fatty acid ester, polyoxyethylene sorbitol fatty acid ester, polyethylene glycol fatty acid ester, fatty acid monoglyceride, polyglycerol fatty acid ester, sorbitan fatty acid ester, propylene glycol fatty acid ester, sucrose fatty acid ester, fatty acid alkanolamides, polyoxyethylene fatty acid amides, polyoxyethylene alkylamine, alkylamine oxide, acetylene glycol, acetylene alcohol and the like.

As the surfactant, a commercially available product may be used. Examples of the commercially available nonionic surfactant include "EMULGEN (R) 911" (polyoxyethylene alkylphenyl ether, manufactured by Kao Corporation). Other examples include "NEWPOL (R) PE-62" (polyoxyethylene polyoxypropylene alkyl ether, manufactured by Sanyo Chemical Industries, Ltd).

The surfactants may be used alone or in combination of two or more thereof.

The content of the surfactant is preferably in the range of 0.001 to 1.0% by mass relative to the total mass of the treatment ink.

### (5) Preservative

Examples of the preservative include aromatic halogen compounds, methylene dithiocyanate, halogen-containing nitrogen-sulfur compounds, and 1,2-benzisothiazolin-3-one.

As the preservative, a commercially available product may be used. Examples of commercially available preservatives include "Preventol (R) CMK" (aromatic halogen compound, manufactured by Bayer AG). In addition, "PROXEL (R) GXL" (1,2-benzisothiazolin-3-one, manufactured by ICI) is exemplified.

### (6) Solvent

The solvent for the treatment ink of the present invention includes water and organic solvents. Among these, from the viewpoint of solubility, the treatment ink preferably contains a large amount of water.

### (6.1) Water

The treatment ink of the present invention has a water content of 55% by mass or more. When the water content is relatively large, the solid content component can be sufficiently dissolved, and the solubility of the treatment ink can be improved.

Furthermore, water has a lower boiling point and dries more easily than many organic solvents. Therefore, water hardly remains on the recording medium as a residual solvent in the process of textile printing. On the other hand, organic solvents are difficult to dry and tend to remain on the recording medium as a residual solvent.

The organic solvent remaining on the recording medium is likely to inhibit the reaction between the reactive dye and the recording medium in the steam treatment after ink application, and is likely to cause inhibition of dyeing or color development. Therefore, by making the water content relatively large, the inhibition is less likely to occur and the dyeability or color developability can be improved.

Examples of the water include pure water such as ion-exchanged water, ultrafiltration water, reverse osmosis water, and distilled water. In addition, examples of the water include ultrapure water. Other examples include water sterilized by ultraviolet irradiation, hydrogen peroxide, or the like. The use of sterilized water can prevent the generation of mold and bacteria when the treatment ink is stored for a long period of time.

### (6.2) Organic Solvent

As the organic solvent, general water-soluble organic solvents are used. Examples of the organic solvents include alcohols (e.g, methanol, ethanol, propanol, isopropanol, butanol, isobutanol, sec-butanol, t-butanol and the like), polyhydric alcohols (e.g, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol and the like), glycol ethers (e.g, ethylene glycol alkyl ether, diethylene glycol alkyl ether, triethylene glycol alkyl ether, propylene glycol alkyl ether, dipropylene glycol alkyl ether, tripropylene glycol alkyl ether and the like), amines (e.g, ethanolamine, diethanolamine, triethanolamine, N-methyldiethanolamine, N-ethyldiethanolamine, morpholine, N-ethylmorpholine, ethylenediamine, diethylene diamine, triethylenetetramine, tetraethylenepentamine, polyethyleneimine, pentamethyldiethylenetriamine, tetramethylpropylenediamine), amides (e.g, formamide, N,N-dimethylformamide, N,N-dimethylacetamide and the like), heterocycles (e.g, 2-pyrrolidone, N-methyl-2-pyrrolidone, cyclohexylpyrrolidone, 2-oxazolidone, 1,3-dimethyl-2-imidazolidinone and the like), and sulfoxides (e.g, dimethyl sulfoxide and the like).

### 3. Physical Properties of Inkjet Treatment Ink

### (1) Viscosity

The viscosity of the treatment ink at 25 °C is preferably 3.5 mPa·s (3.5cP) or more. When the viscosity is within the above range, sufficient ejection property from an inkjet head can be ensured. The viscosity can be adjusted by the content of the low-viscosity water-soluble polymer.

The viscosity can be measured, for example, with an E-type viscometer "TV-25" (manufactured by Toki Sangyo Co., Ltd) at a temperature of 25 °C and a rotation speed of 20 rpm.

### (2) Hydrogen Ion Concentration Index (pH)

The hydrogen ion concentration index (pH) of the treatment ink at 25 °C is preferably alkalinity of 10 or less, and more preferably within a range of 9 to 10. Note that the hydrogen ion concentration index can be adjusted by the content of the alkaline agent.

### 4. Inkjet Recording Method

The inkjet recording method according to the present invention is an inkjet recording method using the above-described inkjet treatment ink, wherein the inkjet treatment ink and the recording ink are applied to a recording medium from respective inkjet heads.

The order in which the treatment ink and the recording ink are applied to the recording medium is not particularly limited. Specifically, any one of the following 1) to 3) may be adopted.
1) A method in which a treatment ink is applied to a recording medium and then a recording ink is applied thereto.
2) A method in which a recording ink is applied to a recording medium and then a treatment ink is applied thereto.
3) A method in which scanning is performed in both directions with heads arranged in parallel in a carriage, and a treatment ink and a recording ink are applied to a recording medium at random.

The inkjet recording method according to the present invention is preferably applied to a fabric to which an alkaline agent and a moisturizer have not been applied, that is, a fabric that has not been pretreated. The remarkable effect of the present invention is obtained by being applied to a fabric that has not been pretreated.

Hereinafter, an inkjet recording apparatus, a recording medium and a recording ink for carrying out an inkjet recording method, and a procedure of the inkjet recording method will be described in this order.

### 5. Inkjet Recording Apparatus

Figure is a schematic configuration diagram illustrating an example of an inkjet recording apparatus used in the inkjet recording method of the present invention. The inkjet recording apparatus 1 illustrated in Figure includes a medium conveyance section 10 adopting a belt conveyance method and an ink supply section 20 adopting an inkjet method.

In the medium conveyance section 10, an endless belt 13 is wound around a plurality of conveyance rollers 11 and 12. One of the plurality of conveyance rollers 11 and 12 is a drive roller and rotates the endless belt 13. The belt 13 has an adhesive outer circumferential surface and holds a sheet-like recording medium 100 on an upper part of the outer circumferential surface. As a result, the medium conveyance section 10 conveys the sheet-like recording medium 100 held by the belt 13 in the conveyance direction [x] in the rotation direction of the belt 13.

The ink supply section 20 includes a plurality of inkjet heads 21. The plurality of inkjet heads 21 eject the ink 200 onto the recording medium 100 conveyed by the medium conveyance section 10. One of the plurality of inkjet heads 21 is a first applying part for applying ink to the recording medium 100. One is a second applying part for applying ink to the recording medium 100.

Each inkjet head 21 ejects the ink 200 onto the recording medium 100 through a plurality of ink ejection openings. Each inkjet head 21 is mounted on the carriage 22 and ejects the ink 200 in the conveyance width direction. Note that the carriage 22 moves back and forth in the conveyance width direction perpendicular to the conveyance direction [x] of the recording medium 100. One carriage 22 may have a plurality of inkjet heads 21 mounted thereon.

The ink 200 ejected from each inkjet head 21 lands on the recording medium 100 conveyed by the medium conveyance section 10. Among the plurality of inkjet heads 21, the inkjet head mounted on the upstream-side carriage 22a disposed on the most upstream side in the conveyance direction [x] is referred to as a pretreatment head 21a. The pretreatment head 21a filled with a treatment ink 200a ejects the treatment ink 200a. Among the plurality of inkjet heads 21, the inkjet head mounted on the downstream-side carriage 22b disposed on the downstream side in the conveyance direction [x] is referred to as a recording head 21b. The recording head 21b filled with a recording ink 200b ejects the recording ink 200b.

Although not illustrated herein, among the plurality of inkjet heads 21, the inkjet head mounted on the carriage 22 disposed on the most downstream side in the conveyance direction [x] may be used as a posttreatment head. The posttreatment head filled with the treatment ink ejects the treatment ink.

The inkjet recording apparatus 1 can eject the recording ink 200b from the recording head 21b onto the recording medium 100 that has been pretreated by landing the treatment ink 200a.

Note that although only one recording head 21b is illustrated in Figure, recording heads 21b may be provided for the respective colors of recording ink. The recording heads 21b corresponding to the recording inks of the respective colors are mounted on the same carriage 22.

The method of ejecting ink in the inkjet head 21 is not limited. Examples of the ink ejecting method include a piezoelectric method, a thermal method, and a continuous method. The piezoelectric method and the continuous method can stably eject even ink containing a polymer material. In particular, the piezoelectric method is preferable because of its small size and high degree of integration.

Although not illustrated herein, the inkjet recording apparatus 1 may include a drying means between the pretreatment head 21a and the recording head 21b. Providing the drying means can dry the treatment ink 200a landed on the recording medium 100 before the recording ink 200b lands. It is preferable that the drying means dries and removes solvents (moisture and organic solvents) of the treatment ink 200a applied to the recording medium 100 as much as possible. Removal of the solvent can prevent the subsequent recording ink 200b from bleeding.

Therefore, the drying means preferably sets the surface temperature of the recording medium 100 to a temperature suitable for the composition of the treatment ink 200a within a range of 30 to 80 °C. Examples of the drying means include a drying means using temperature-controllable wind or warm air, a drying means using a hot plate, a drying means using visible light or far infrared light, a drying means using a heat roller, and a drying means using a means for irradiating microwaves. In the case of providing the drying means, it is preferable to provide an exhaust pipe or a fan for removing vapor generated by drying from the inside of the apparatus.

The pretreatment head 21a and the recording head 21b may not be mounted on the carriage 22 and may be disposed over a conveyance width direction perpendicular to the conveyance direction [x] of the recording medium 100.

### 6. Recording Medium

The recording medium 100 is not particularly limited, and examples thereof include cloth material such as fabric; plain paper; cardboard; thin paper; Japanese paper; specialty paper; resin film and building materials. In the present invention, particularly when the recording medium 100 is a fabric, significant effects are obtained.

The material constituting the fabric preferably contains a fiber dyeable with a reactive dye. The material constituting the fabric is not particularly limited, but particularly, any of cotton, silk, hemp, wool, nylon fiber, rayon fiber, and a blend of these is preferable. The fabric may be any form of the above-mentioned fibers such as woven fabric, knitted fabric, and nonwoven fabric. The fabric preferably contains 100% of fibers dyeable with a reactive dye, but may be a blended woven fabric or a blended nonwoven fabric.

In a case of using a fabric as the recording medium 100, it is preferable to remove, by washing in advance, natural impurities (fats and oils, wax, pectic substances, natural pigments, and the like) adhered to fibers of the fabric, residuals of chemicals (sizing agent and the like) used in the manufacturing process of the fabric, stains, and the like. By the removal, a uniformly dyed product with the reactive dye is obtained. Examples of the cleaning agent include alkaline agents (sodium hydroxide, sodium carbonate, and the like), surfactants (anionic surfactants or nonionic surfactants), and enzymes.

### 7. Recording Ink

Examples of the recording ink according to the present invention include general inks of various colors containing a reactive dye. In one example, the recording ink may contain, in addition to the reactive dye, an organic solvent, a surfactant, an inorganic salt, a preservative, and the like in pure water such as ion exchanged water. Of these, the organic solvent, the surfactant, and the preservative are synonymous with those used in the treatment ink described above. The reactive dye and the inorganic salt will be described.

### (1) Reactive Dye

Examples of the reactive dye include general reactive dyes of various colors. The reactive dye may be an addition reaction type dye or a substitution reaction type dye. Among these, a reactive dye having a monochlorotriazine group as a reactive group is preferable. The reactive dyes preferably used in the present invention are shown below, but the present invention is not limited to these exemplified compounds.

The reactive dyes preferably used in the present invention include the following.
C.I.Reactive Yellow; 2, 3, 7, 15, 17, 18, 22, 23, 24, 25, 27, 37, 39, 42, 57, 69, 75, 76, 81, 84, 85, 86, 87, 92, 95, 102, 105, 111, 125, 135, 136, 137, 142, 143, 145, 151, 160, 161, 165, 167, 168, 175, 176,
C.I.Reactive Orange; 1, 4, 5, 7, 11, 12, 13, 15, 16, 20, 30, 35, 56, 64, 67, 69, 70, 72, 74, 82, 84, 86, 87, 91, 92, 93, 95, 107,
C.I.Reactive Red; 2, 3, 3:1, 5, 8, 11, 21, 22, 23, 24, 24:1, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 226, 228, 235,
C.I.Reactive Violet; 1, 2, 4, 5, 6, 22, 23, 33, 36, 38,
C.I.Reactive Blue; 2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
C.I.Reactive Green; 8, 12, 15, 19, 21,
C.I.Reactive Brown; 2, 7, 9, 10, 11, 17, 18, 19, 21, 23, 31, 37, 43, 46,
C.I.Reactive Black 5, 8, 13, 14, 31, 34, 39

The content of the reactive dye is preferably in a range of 0.1 to 20% by mass and more preferably in a range of 0.2 to 13% by mass with respect to the total mass of the recording ink.

### (2) Inorganic Salt

The recording ink according to the present invention may contain an inorganic salt. The viscosity of the recording ink and the reactive dye can be stably maintained by containing the inorganic salt. The inorganic salt is not particularly limited, and examples thereof include sodium chloride, sodium sulfate, magnesium chloride, and magnesium sulfate.

### 8. Procedure of Inkjet Recording Method

The inkjet recording method of the present invention is carried out using the inkjet recording apparatus 1 described above. First, the recording medium 100 is prepared. In one example, as described above, the recording medium 100 is a fabric from which residuals of chemicals (sizing agents or the like) used in the manufacturing process, stains, and the like have been removed by cleaning. Next, the conveyance rollers 11 and 12 are rotated to move the recording medium 100 in the conveyance direction [x].

With the movement of the recording medium, the treatment ink 200a is ejected from the pretreatment head 21a in the ink supply section 20 so as to be landed on the recording medium 100. Thus, the landing position of the treatment ink 200a on the recording medium 100 is pretreated with the treatment ink 200a. At this time, it is preferable that the amount of the treatment ink applied to the fabric (recording medium 100) is 30 g/m ²or less. Thus, bleeding at the time of landing can be suppressed. Thereafter, the treatment ink 200a landed on the recording medium 100 may be dried, if necessary.

Next, the recording ink 200b is ejected from the recording head 21b in the ink supply section 20 and lands at the landing position of the treatment ink 200a. As a result, the reactive dye contained in the recording ink 200b is fixed to the recording medium 100, and an image is recorded.

After the ink application, a color development step by steam treatment is carried out on the recording medium 100 to promote the fixing of the reactive dye on the recording medium 100. Thereafter, the recording medium 100 having the reactive dye fixed thereon is subjected to a washing step and a drying step, and the procedure is completed.

### [Examples]

Hereinafter, the present invention will be specifically described with reference to Examples, but the present invention is not limited thereto. In the examples, "part(s)" or "%" means "part(s) by mass" or" mass%" unless otherwise specified.

In the following examples, operations were performed at room temperature (25 °C) unless otherwise specified.

### 1. Preparation of Treatment Ink

Each treatment ink was prepared by the following procedure.

The components shown in Tables I to IV below were sequentially added to a preparation container, mixed, and sufficiently stirred. The obtained solution was filtered through a filter having a pore size of 1 µm to obtain each treatment ink.

Details of each component are given below. The "low-viscosity polymer" and the "sizing agent" correspond to the above-mentioned "low-viscosity water-soluble polymer" and "high-viscosity water-soluble polymer", respectively.

### (Low-viscosity polymer)

PEG2000: polyethylene glycol (molecular weight: 2000)
PEG6000: polyethylene glycol (molecular weight: 6000)
PEG10000: polyethylene glycol (molecular weight: 10000)

### (Sizing agent)

Carboxymethylcellulose: CMC Daicel 1130, manufactured by Daicel Miraizu Ltd.
Sodium alginate: ALGITEX LL, manufactured by Kimica Corporation

### (Surfactant)

OLFINE (R) E1010: acetylene glycol-based surfactant, manufactured by Nissin Chemical Industry Co., Ltd.

### (Preservative)

PROXEL (R) GXL: 20% aqueous dipropylene glycol of 1,2-benzisothiazolin-3-one, manufactured by Lonza Japan Ltd.

In Tables I to IV, the "solid content concentration" refers to the proportion of the solid content relative to the total mass of the treatment ink. The solid content corresponds to an alkaline agent, a moisturizer, and a water-soluble polymer (a low-viscosity polymer and a sizing agent).

The viscosity was measured at a temperature of 25 °C using an E-type viscometer "TV-25" (manufactured by Toki Sangyo Co., Ltd).

Tables I to IV show the configuration, solid content concentration, and viscosity of each treatment ink. In the configuration of each treatment ink, the unit for each component is % by mass.

### [Table 1]

**Table I**

| | | Example 1 | Example 2 | Example 3 | Example 4 | Example 5 |
|---|---|---|---|---|---|---|
| | | Ink 1 | Ink 2 | Ink 3 | Ink 4 | Ink 5 |
| Alkaline agent | Sodium hydrogen carbonate | - | - | - | - | - |
| | Potassium hydrogen carbonate | 10.0 | 10.0 | 10.0 | 10.0 | 10.0 |
| | Potassium carbonate | - | - | - | - | - |
| | Potassium dihydrogen phosphate | - | - | - | - | - |
| | Dipotassium hydrogen phosphate | - | - | - | - | - |
| Moisturizer | Urea | - | - | - | - | 15.0 |
| | 2-imidazolidinone | 15.0 | 15.0 | 15.0 | 15.0 | - |
| Low-viscosity polymer | PEG2000 | - | - | - | - | - |
| | PEG6000 | - | - | 2.0 | 5.0 | 5.0 |
| | PEG10000 | - | - | - | - | - |
| Sizing agent | Carboxymethylcellulose | - | 1.0 | - | - | - |
| | Sodium alginate | - | - | - | - | - |
| Surfactant | OLFINE E1010 | 0.1 | 0.1 | 0.1 | 0.1 | 0.1 |
| Preservative | PROXEL GXL | 0.1 | 0.1 | 0.1 | 0.1 | 0.1 |
| Solvent | Glycerin | 5.0 | 5.0 | 5.0 | 5.0 | 5.0 |
| | Ethylene glycol | 5.0 | 5.0 | 5.0 | 5.0 | 5.0 |
| Ion exchanged water | | 64.8 | 63.8 | 62.8 | 59.8 | 59.8 |
| Total | | 100.0 | 100.0 | 100.0 | 100.0 | 100.0 |
| Solid content concentration [% by mass] | | 25.0 | 26.0 | 27.0 | 30.0 | 30.0 |
| Viscosity [mPa · s] | | 2 | 3 | 3 | 5 | 5 |

### [Table 2]

**Table 11**

| | | Example 6 | Example 7 | Example 8 | Example 9 | Example 10 |
|---|---|---|---|---|---|---|
| | | Ink 6 | Ink 7 | Ink 8 | Ink 9 | Ink 10 |
| Alkaline agent | Sodium hydrogen carbonate | - | - | - | - | - |
| | Potassium hydrogen carbonate | - | 5.0 | 10.0 | 10.0 | 10.0 |
| | Potassium carbonate | 10.0 | 5.0 | - | - | - |
| | Potassium dihydrogen phosphate | - | - | - | - | - |
| | Dipotassium hydrogen phosphate | - | - | - | - | - |
| Moisturizer | Urea | - | - | - | - | - |
| | 2-imidazolidinone | 15.0 | 15.0 | 15.0 | 15.0 | 15.0 |
| Low-viscosity polymer | PEG2000 | - | - | - | 8.0 | - |
| | PEG6000 | 5.0 | 5.0 | - | - | - |
| | PEG10000 | - | - | - | - | 3.0 |
| Sizing agent | Carboxymethylcellulose | - | - | - | - | - |
| | Sodium alginate | - | - | 2.0 | - | - |
| Surfactant | OLFINE E1010 | 0.1 | 0.1 | 0.1 | 0.1 | 0.1 |
| Preservative | PROXEL GXL | 0.1 | 0.1 | 0.1 | 0.1 | 0.1 |
| Solvent | Glycerin | 5.0 | 5.0 | 5.0 | 5.0 | 5.0 |
| | Ethylene glycol | 5.0 | 5.0 | 5.0 | 5.0 | 5.0 |
| Ion exchanged water | | 59.8 | 59.8 | 62.8 | 56.8 | 61.8 |
| Total | | 100.0 | 100.0 | 100.0 | 100.0 | 100.0 |
| Solid content concentration [% by mass] | | 30.0 | 30.0 | 27.0 | 33.0 | 28.0 |
| Viscosity [mPa · s] | | 5 | 5 | 6 | 6 | 8 |

### [Table 3]

**Table III**

| | | Example 11 | Example 12 | Example 13 | Example 14 | Example 15 | Example 16 |
|---|---|---|---|---|---|---|---|
| | | Ink 11 | Ink 12 | Ink 13 | Ink 14 | Ink 15 | Ink 16 |
| Alkaline agent | Sodium hydrogen carbonate | - | - | - | - | - | - |
| | Potassium hydrogen carbonate | - | - | 10.0 | 3.0 | 1.0 | 15.0 |
| | Potassium carbonate | - | - | - | - | - | - |
| | Potassium dihydrogen phosphate | 10.0 | - | - | - | - | - |
| | Dipotassium hydrogen phosphate | - | 10.0 | - | - | - | - |
| Moisturizer | Urea | - | - | - | - | - | - |
| | 2-imidazolidinone | 15.0 | 15.0 | 10.0 | 30.0 | 32.0 | 8.0 |
| Low-viscosity polymer | PEG2000 | - | - | - | - | - | - |
| | PEG6000 | 5.0 | 5.0 | 5.0 | 1.0 | 1.0 | 5.0 |
| | PEG10000 | - | - | - | - | - | - |
| Sizing agent | Carboxymethylcellulose | - | - | - | - | - | - |
| | Sodium alginate | - | - | - | - | - | - |
| Surfactant | OLFINE E1010 | 0.1 | 0.1 | 0.1 | 0.1 | 0.1 | 0.1 |
| Preservative | PROXEL GXL | 0.1 | 0.1 | 0.1 | 0.1 | 0.1 | 0.1 |
| Solvent | Glycerin | 5.0 | 5.0 | 5.0 | 5.0 | 5.0 | 5.0 |
| | Ethylene glycol | 5.0 | 5.0 | 5.0 | 5.0 | 5.0 | 5.0 |
| Ion exchanged water | | 59.8 | 59.8 | 64.8 | 55.8 | 55.8 | 61.8 |
| Total | | 100.0 | 100.0 | 100.0 | 100.0 | 100.0 | 100.0 |
| Solid content concentration [% by mass] | | 30.0 | 30.0 | 25.0 | 34.0 | 34.0 | 28.0 |
| Viscosity [mPa · s] | | 5 | 5 | 4 | 3 | 3 | 5 |

### [Table 4]

**Table IV**

| | | Comparative example 1 | Comparative example 2 | Comparative example 3 | Comparative example 4 | Comparative example 5 |
|---|---|---|---|---|---|---|
| | | Ink 17 | Ink 18 | Ink 19 | Ink 20 | Ink 21 |
| Alkaline agent | Sodium hydrogen carbonate | 10.0 | - | - | - | - |
| | Potassium hydrogen carbonate | - | 5.0 | 10.0 | 15.0 | - |
| | Potassium carbonate | - | - | - | - | - |
| | Potassium dihydrogen phosphate | - | - | - | - | - |
| | Dipotassium hydrogen phosphate | - | - | - | - | - |
| Moisturizer | Urea | - | - | - | - | - |
| | 2-imidazolidinone | 15.0 | 8.0 | 15.0 | - | 15.0 |
| Low-viscosity polymer | PEG2000 | - | - | - | - | - |
| | PEG6000 | 5.0 | 5.0 | 5.0 | 5.0 | 5.0 |
| | PEG10000 | - | - | - | - | - |
| Sizing agent | Carboxymethylcellulose | - | - | - | - | - |
| | Sodium alginate | - | - | - | - | - |
| Surfactant | OLFINE E1010 | 0.1 | 0.1 | 0.1 | 0.1 | 0.1 |
| Preservative | PROXEL GXL | 0.1 | 0.1 | 0.1 | 0.1 | 0.1 |
| Solvent | Glycerin | 5.0 | 5.0 | 5.0 | 5.0 | 5.0 |
| | Ethylene glycol | 5.0 | 5.0 | 20.0 | 5.0 | 5.0 |
| Ion exchanged water | | 59.8 | 71.8 | 44.8 | 69.8 | 69.8 |
| Total | | 100.0 | 100.0 | 100.0 | 100.0 | 100.0 |
| Solid content concentration [% by mass] | | 30.0 | 18.0 | 30.0 | 20.0 | 20.0 |
| Viscosity [mPa · s] | | 5 | 3 | 6 | 4 | 4 |

### 2. Preparation of Recording Ink (Black Ink)

The following components were sequentially added to the preparation container, ion-exchanged water was further added thereto so that the total became 100%, mixed, and sufficiently stirred. The obtained solution was filtered through a filter having a pore size of 1 µm to obtain a black ink.

| | |
|---|---|
| Ethylene glycol | 20.00% by mass |
| Glycerin | 10.00% by mass |
| Reactive black 5 | 20.00% by mass |
| "OLFINE (R) E1010" (acetylene glycol-based surfactant, manufactured by Nissin Chemical Industry Co., Ltd) | 0.05% by mass |
| "PROXEL(R) GXL" (20% aqueous dipropylene glycol of 1,2-benzisothiazolin-3-one, manufactured by Lonza Japan Ltd.) | 0.10% by mass |

### 3. Inkjet Recording

Using the evaluation printer illustrated in Figure, inkjet recording was performed on a recording medium to produce a sample.

A first head carriage 1 and a second head carriage 2 were installed in the evaluation printer illustrated in Figure. Two piezoelectric inkjet heads "KM1024iSAE" (manufactured by Konica Minolta, Inc) were mounted on the first head carriage 1. The inkjet heads were loaded with each of the treatment inks obtained above. Two piezoelectric inkjet heads "KM1024iSAE" (manufactured by Konica Minolta, Inc) were mounted on the second head carriage. The inkjet heads were loaded with the black ink obtained above.

The recording medium was conveyed by conveyance rollers 11 and 12 in the conveyance direction illustrated in Figure. Note that a fabric (white cotton broad) was used as the recording medium.

First, from the two heads of the first head carriage 1, a total of 15 mL/m² of the treatment ink was uniformly applied to the entire surface of the conveyed fabric. Next, a solid image was formed with the black ink ejected from the two heads of the second head carriage 2.

The fabric was steamed at a temperature of 103 °C for 12 minutes to develop a color, and washed with water. Thereafter, the fabric was cleaned at 90 °C, washed with water, and dried to obtain a sample.

### 4. Evaluation

### (1) Dyeability or Color developability

The reflection density of the recorded surface of the obtained sample was measured using a reflection densitometer (manufactured by X-Rite, Inc), and the dyeability or the color developability was evaluated according to the following criteria. Note that grades A or higher (A to AAA) were regarded as having no practical problem.
AAA: The reflection density is 1.2 or more.
AA: The reflection density is 1.1 or more and less than 1.2.
A: The reflection density is 0.9 or more and less than 1.1.
B: The reflection density is less than 0.9.

### (2) Solubility

The treatment ink prepared above was stored at 0 °C for 1 week, then, whether or not a precipitate was generated was visually confirmed, and the solubility was evaluated according to the following criteria. Note that the grade A was regarded as having no practical problem.
A: No precipitate is generated.
B: A precipitate is generated.

### (3) Ejection Property

Using the evaluation printer illustrated in Figure, the treatment ink was ejected continuously for 1 hour onto a cotton broad from the two heads of the first head carriage 1, thereby forming a solid image. Thereafter, the treatment ink was ejected from the two heads of the first head carriage 1 onto the transparent film to print a nozzle check pattern. The presence or absence of a defective nozzle was confirmed, and the ejection property was evaluated according to the following criteria. Note that grades A or higher (A to AA) were regarded as having no practical problem.
AA: The number of defective nozzles is 0 or 1.
A: The number of defective nozzles is within a range of 2 to 10.
B: The number of defective nozzles is 11 or more.

The evaluation results are shown in Table V

### [Table 5]

**Table V**

| Ink No. | Dyeability or Color developability | Solubility | Ejection property | Remarks |
|---|---|---|---|---|
| Ink 1 | A | A | A | Example 1 |
| Ink 2 | A | A | AA | Example 2 |
| Ink 3 | AA | A | AA | Example 3 |
| Ink 4 | AAA | A | AA | Example 4 |
| Ink 5 | AAA | A | AA | Example 5 |
| Ink 6 | AAA | A | AA | Example 6 |
| Ink 7 | AAA | A | AA | Example 7 |
| Ink 8 | AA | A | A | Example 8 |
| Ink 9 | AAA | A | AA | Example 9 |
| Ink 10 | AAA | A | AA | Example 10 |
| Ink 11 | A | A | AA | Example 11 |
| Ink 12 | A | A | AA | Example 12 |
| Ink 13 | AA | A | AA | Example 13 |
| Ink 14 | AA | A | A | Example 14 |
| Ink 15 | A | A | A | Example 15 |
| Ink 16 | A | A | AA | Example 16 |
| Ink 17 | AAA | B | B | Comparative example 1 |
| Ink 18 | B | A | AA | Comparative example 2 |
| Ink 19 | B | B | B | Comparative example 3 |
| Ink 20 | B | A | A | Comparative example 4 |
| Ink 21 | B | A | AA | Comparative example 5 |

It is understood from Examples and Comparative Examples that the treatment ink of the present invention can satisfy both the dyeability or color developability and the ejection property.

It is understood from Examples 4, 6, 11, and 12 that when the alkaline agent is potassium carbonate or potassium hydrogen carbonate, the dyeability or the color developability can be improved.

It is understood from Examples 1 to 3 that the ejection property can be improved by containing a water-soluble polymer. In particular, it is understood that when the water-soluble polymer is polyethylene glycol, both the dyeability or color developability and the ejection property can be achieved.

It is understood from Examples 1 to 4 that the ejection property can be improved when the viscosity of the inkjet treatment ink at 25 °C is 3.5 mPa·s or more.

It is understood from Examples 13 to 16 that when the content of the potassium salt is in the range of 3 to 10% by mass relative to the total mass of the inkjet treatment ink, the dyeability or color developability can be improved.

It is understood from Examples 13 to 16 that when the content of the moisturizer is in the range of 10 to 30% by mass relative to the total mass of the inkjet treatment ink, the dyeability or color developability can be improved.

## Claims

1. A water-based inkjet treatment ink for use in combination with a recording ink containing a reactive dye, the inkjet treatment ink containing an alkaline agent and a moisturizer,
wherein the alkaline agent is a potassium salt,
the solid content concentration of the inkjet processing ink is 20% by mass or more, and
the water content is 55% by mass or more.

2. The inkjet treatment ink according to claim 1,
wherein the alkaline agent is potassium carbonate or potassium hydrogen carbonate.

3. The inkjet treatment ink according to claim 1,
wherein the moisturizer is urea or 2-imidazolidinone.

4. The inkjet treatment ink according to claim 1, further containing:
a water-soluble polymer.

5. The inkjet treatment ink according to claim 4,
wherein the water-soluble polymer is polyethylene glycol.

6. The inkjet treatment ink according to claim 1, wherein the viscosity of the inkjet treatment ink at 25 °C is 3.5 mPa·s or higher.

7. The inkjet treatment ink according to claim 1, wherein the solubility of the potassium salt in water at 25 °C is 30 g/100 mL or more.

8. The inkjet treatment ink according to claim 1,
wherein the content of the potassium salt is in the range of 3 to 10% by mass relative to the total mass of the inkjet treatment ink.

9. The inkjet treatment ink according to claim 1,
wherein the content of the moisturizer is in the range of 10 to 30% by mass relative to the total mass of the inkjet treatment ink.

10. An inkjet recording method using an inkjet treatment ink,
wherein the inkjet treatment ink is the inkjet treatment ink according to any one of claims 1 to 9, and
the inkjet treatment ink and the recording ink are applied to a fabric from each inkjet head, respectively.

11. The inkjet recording method according to claim 10,
wherein the inkjet treatment ink and the recording ink are applied to a fabric to which an alkaline agent and a moisturizer has not been applied.

12. The inkjet recording method according to claim 10,
wherein the inkjet treatment ink and the recording ink are applied in any order, and the amount of the inkjet treatment ink applied to the fabric is 30 g/m² or less.

13. An inkjet recording system using an inkjet treatment ink,
wherein the inkjet treatment ink is the inkjet treatment ink according to any one of claims 1 to 9, and
the inkjet recording system comprises: a first applying part for applying the recording ink to a fabric; and a second applying part for applying the inkjet treatment ink to the fabric.
